# EUROPEAN PATENT APPLICATION

(11) **EP 4 471 884 A1**
(43) Date of publication of application: **04.12.2024**
(21) Application number: 22922681.6
(22) Date of filing: 26.01.2022
(51) Int. Cl.: H01M 4/13

(54) **ELECTRODE ASSEMBLY, ELECTROCHEMICAL DEVICE, AND ELECTRONIC DEVICE**

(71) Applicant: Ningde Amperex Technology Ltd., Ningde, Fujian 352106 (CN)
(72) Inventor: JIANG, Nan, Ningde City, Fujian 352100 (CN)
(74) Representative: Icosa
(86) International application number: PCT/CN2022/074106
(87) International publication number: WO 2023/141831

(57) **Abstract**

An electrode assembly is formed by winding a stacked body. The stacked body includes a first conductive layer, a second conductive layer, and a first layer configured between the first conductive layer and the second conductive layer, and the first layer includes an insulating material. The first conductive layer includes a first surface, a first end portion, and a second end portion disposed opposite to the first end portion, and the first surface is covered with the wound stacked body. The electrode assembly further includes a first conductive plate, a second layer and a third layer. The first conductive plate is connected to the first surface. A direction perpendicular to one surface of the first conductive plate is defined as a first direction, when viewed in the first direction, the first conductive plate partially overlaps the first surface, the second layer covers a region, overlapping the first surface, of the first conductive plate, and the second layer includes an insulating material. When viewed in the first direction, the third layer covers the first surface, and the third layer includes an insulating material; and the second layer is disposed between the first surface and the third layer in the first direction. The present application further provides an electrochemical device and an electronic device.

## Description

### TECHNICAL FIELD

The present application relates to the field of energy storage devices, in particular to an electrode assembly, and an electrochemical device and an electronic device including the same.

### BACKGROUND

Electrochemical devices (e.g., batteries) are widely used in electronic products such as electronic mobile equipment, power tools, and electric vehicles, and the performance requirements for electrochemical devices are getting higher and higher. As electronic products are often dropped, hit, vibrated and subjected to other mechanical abuse during use, this may lead to short circuits inside the electrochemical devices, reducing the service life of the electrochemical devices.

### SUMMARY

In order to solve the above defects, it is necessary to provide an electrode assembly and an electrochemical device capable of reducing the possibility of a short circuit.

It is also necessary to provide an electronic device having the above electrochemical device.

A first aspect of the present application provides an electrode assembly, formed by winding a stacked body. The stacked body includes a first conductive layer, a second conductive layer, and a first layer configured between the first conductive layer and the second conductive layer, and the first layer includes an insulating material. The first conductive layer includes a first surface, a first end portion, and a second end portion disposed opposite to the first end portion, and the first surface is covered with the wound stacked body. The electrode assembly further includes a first conductive plate, a second layer and a third layer. The first conductive plate is connected to the first surface. A direction perpendicular to one surface of the first conductive plate is defined as a first direction. When viewed in the first direction, the first conductive plate partially overlaps the first surface, the second layer covers a region, overlapping the first surface, of the first conductive plate, and the second layer includes an insulating material. When viewed in the first direction, the third layer covers the first surface, and the third layer includes an insulating material. The second layer is disposed between the first surface and the third layer in the first direction.

In the present application, the second layer is configured to cover a convex portion between the first conductive plate and the first surface and a convex portion at an edge of the first conductive plate, reducing the possibility of the convex portions piercing through the first layer and being short-circuited in contact with the second conductive layer. The third layer provides insulating protection to the first surface, reducing the possibility of the first surface being short-circuited in contact with a second metal layer during mechanical abuse, and also reducing the possibility of a first metal layer being torn at the first surface, and the torn first metal layer piercing through the first layer and being short-circuited in contact with the second metal layer during mechanical abuse. Therefore, the service life of an electrochemical device is prolonged.

In some possible implementations, a direction from the first end portion to the second end portion is defined as a second direction, and a direction perpendicular to the first direction and the second direction is defined as a third direction. In the third direction, the first conductive layer further includes a third end portion and a fourth end portion located at the other side of the third end portion. In the third direction, the third layer includes a fifth end portion and a sixth end portion located at the other side of the fifth end portion. When viewed in the first direction, the first conductive plate extends out of the third end portion and the fifth end portion. Therefore, the first conductive plate conveniently extends out of a shell and is connected to external equipment.

In some possible implementations, in the third direction, the third layer extends beyond the third end portion from a region overlapping the first surface. Therefore, not only can the third layer sufficiently protect the first surface, but also a portion, extending beyond the third end portion, of the third layer can cover a convex portion generated by the first metal layer at the third end portion, and also cover the convex portion generated at the edge of the first conductive plate.

In some possible implementations, in the third direction, the third layer extends beyond the fourth end portion from a region overlapping the first surface. Therefore, the third layer can sufficiently protect the first surface, and a portion, extending beyond the fourth end portion, of the third layer can also cover a convex portion generated by the first metal layer at the fourth end portion.

In some possible implementations, in the third direction, the second layer extends beyond the third end portion from a region overlapping the first surface. Therefore, a portion, extending beyond the third end portion, of the second layer can also cover the convex portion generated at the edge of the first conductive plate.

In some possible implementations, in the third direction, the second layer extends beyond the fifth end portion from a region overlapping the first surface. Therefore, a portion, extending beyond the fifth end portion, of the second layer can cover the convex portion at the edge of the first conductive plate. Moreover, the portion, extending beyond the fifth end portion, of the second layer is bonded to the first conductive plate, and compared with a solution that utilizes the portion, exceeding the third end portion, of the third layer to cover the convex portion at the edge of the first conductive plate, the exceeding part of the second layer is not likely to be folded over during mechanical abuse.

In some possible implementations, the first conductive layer includes a first metal layer and a first conductive material layer stacked in the first direction. In the second direction, the first conductive plate is located between the first end portion and the first conductive material layer.

In some possible implementations, when viewed in the first direction, the third layer partially overlaps the first conductive material layer. In this way, not only can the third layer sufficiently protect the first surface, but also lithium ions separated from the first conductive material layer can be sufficiently received by the first conductive material layer, reducing the risk of excess lithium ions being hoarded and generating lithium dendrites.

In some possible implementations, the second layer further includes a seventh end portion located at one side of the first end portion and an eighth end portion located at one side of the second end portion in the second direction. The third layer further includes a ninth end portion located at one side of the first end portion and a tenth end portion located at one side of the second end portion in the second direction. In the second direction, a distance from the seventh end portion to the ninth end portion is defined as a first distance, and a distance from the eighth end portion to the tenth end portion is defined as a second distance. To satisfy that the ninth end portion extends beyond the seventh end portion in the second direction and at the same time, the tenth end portion not only extends beyond the eighth end portion in the second direction but also covers the first conductive material layer, the first distance is set to be less than the second distance.

In some possible implementations, considering that after attaching the third layer on the first surface, the first metal layer and the third layer may be cut together in the third direction, a convex portion at the first end portion after cutting is reduced. In order to reserve a space for the third layer to be cut, and considering a possible wrinkle problem if the third layer is oversized in the second direction, the first distance is set to be greater than the second distance.

In some possible implementations, a dimension of a region, overlapping the first surface, of the second layer in the third direction is a third distance, a distance of the first conductive layer from the third end portion to the fourth end portion in the third direction is a fourth distance, and the third distance is less than or equal to one half of the fourth distance. In this way, if severe mechanical abuse occurs, the first surface may be fractured in time, so that the first conductive plate is electrically disconnected from the first conductive layer, reducing the possibility of a short circuit.

In some possible implementations, the first surface forms a first zone and a second zone after the stacked body is folded back once, and the first end portion is located in the first zone. The first conductive plate is connected to the first zone. In the second direction, the third layer extends at least from the first zone to the second zone.

In some possible implementations, when viewed in the first direction, the first conductive plate is separated from the third layer disposed in the second zone.

In some possible implementations, the first conductive layer includes a first metal layer and a first conductive material layer stacked in the first direction. The first conductive material layer is connected to the second zone.

In some possible implementations, the first conductive layer includes a first metal layer and a first conductive material layer stacked in the first direction. The first conductive plate is welded to the first metal layer, so that a higher connection strength is provided between the second conductive plate and the first metal layer.

In some possible implementations, the first metal layer includes aluminum.

In some possible implementations, the first conductive layer is a positive electrode.

In some possible implementations, the second conductive layer includes a second metal layer and a second conductive material layer stacked in the first direction. The electrode assembly further includes a second conductive plate, and the second conductive plate is welded to the second metal layer, so that a higher connection strength is provided between the second conductive plate and the second metal layer.

In some possible implementations, the second metal layer includes copper.

In some possible implementations, the second conductive layer is a negative electrode.

In some possible implementations, when viewed in the first direction, a weld of the first conductive plate and the first surface has a convex portion protruding from the first surface toward the first conductive plate.

In some possible implementations, when viewed in the first direction, a weld of the first conductive plate and the first surface has a concave portion concaved from the first surface toward the first conductive plate.

In some possible implementations, a dimension of the region, overlapping the first surface, of the first conductive plate in the third direction is a fifth distance, a distance of the first conductive layer from the third end portion to the fourth end portion in the third direction is a fourth distance, and the fifth distance is less than or equal to one third of the fourth distance. In this way, if severe mechanical abuse occurs, the first surface may be fractured in time, so that the first conductive plate is electrically disconnected from the first conductive layer, reducing the possibility of a short circuit.

In some possible implementations, the first conductive layer further includes a second surface opposite to the first surface in the first direction. The electrode assembly further includes a fourth layer. The fourth layer covers the second surface, and the fourth layer includes an insulating material. In this way, the fourth layer may provide insulating protection to the second surface, reducing the possibility of the second surface being short-circuited in contact with the second metal layer during mechanical abuse, also reducing the possibility of the first metal layer being torn at the second surface and the torn first metal layer piercing through the first layer and being short-circuited in contact with the second metal layer during mechanical abuse, and further prolonging the service life of the electrochemical device.

A second aspect of the present application further provides an electrochemical device, including a shell. The electrochemical device further includes the above electrode assembly, the electrode assembly is disposed in the shell, and the first conductive plate extends from one end of the shell.

A third aspect of the present application further provides an electronic device, including the above electrochemical device.

### BRIEF DESCRIPTION OF DRAWINGS

The foregoing and/or additional aspects and advantages of the present application will become apparent and readily understood from the description of the embodiments in conjunction with the following accompanying drawings.
FIG. 1 is a front diagram of an electrochemical device according to an embodiment of the present application.
FIG. 2 is a schematic diagram of the electrochemical device shown in FIG. 1 before encapsulation.
FIG. 3 is a sectional diagram of the electrochemical device shown in FIG. 1 along A-A.
FIG. 4 is an upward diagram of an electrode assembly of the electrochemical device shown in FIG. 1 in some embodiments.
FIG. 5A is an enlarged diagram of the electrode assembly shown in FIG. 4 at VA.
FIG. 5B is a partial schematic diagram of the electrode assembly shown in FIG. 5A at VB.
FIG. 6 is an upward diagram of an electrode assembly of the electrochemical device shown in FIG. 1 in other embodiments.
FIG. 7 is an upward diagram of an electrode assembly of the electrochemical device shown in FIG. 1 in yet other embodiments.
FIG. 8 is an expanded diagram of a first conductive layer of the electrode assembly shown in FIG. 4.
FIG. 9 is an expanded diagram of a second conductive layer of the electrode assembly shown in FIG. 4.
FIG. 10 is a front diagram of the first conductive layer shown in FIG. 8.
FIG. 11 is a front diagram of a first conductive layer in other embodiments.
FIG. 12 is a front diagram of the first conductive layer shown in FIG. 11 after removing a third layer.
FIG. 13 is a sectional diagram of the first conductive layer shown in FIG. 12 along B-B in some embodiments.
FIG. 14 is a sectional diagram of the first conductive layer shown in FIG. 12 along B-B in other embodiments.
FIG. 15 is an upward diagram of an electrode assembly of an electrochemical device according to another embodiment of the present application.
FIG. 16 is an upward diagram of an electrode assembly of an electrochemical device according to yet another embodiment of the present application.
FIG. 17 is a sectional diagram of the electrochemical device shown in FIG. 16.
FIG. 18 is a schematic structural diagram of an electronic device according to an embodiment of the present application.

**Reference numeral description of main components**

| | |
|---|---|
| Electronic device | 1 |
| Stacked body | 2 |
| Shell | 10 |
| First shell | 11 |
| Second shell | 12 |
| Electrode assembly | 20 |
| First conductive layer | 21 |
| First surface | 21A |
| First zone | 21A1 |
| Second zone | 21A2 |
| Third zone | 21A3 |
| Second surface | 21B |
| Third surface | 21C |
| Fourth surface | 21D |
| Second conductive layer | 22 |
| First layer | 23 |
| First conductive plate | 30 |
| First conductive zone | 31 |
| Second conductive zone | 32 |
| Convex portion | 33, 33a, 34a, 35, 35' |
| Concave portion | 34, 33b, 34b |
| Second conductive plate | 40 |
| Second layer | 50 |
| Seventh end portion | 51 |
| Eighth end portion | 52 |
| Fifth layer | 54 |
| Third layer | 60 |
| Fifth end portion | 61 |
| Sixth end portion | 62 |
| Ninth end portion | 63 |
| Tenth end portion | 64 |
| Fourth layer | 70 |
| Electrochemical device | 100, 200, 300 |
| First shell zone | 111 |
| Second shell zone | 112 |
| Third shell zone | 121 |
| Fourth shell zone | 122 |
| First segment | 201 |
| First outer surface | 201a |
| First bent segment | 202 |
| Second segment | 203 |
| Second outer surface | 203a |
| Second bent segment | 204 |
| First connection end | 205 |
| Second connection end | 206 |
| Third connection end | 207 |
| Fourth connection end | 208 |
| First metal layer | 210 |
| First face | 210a |
| Region | 210a1, 210a2, 210a3 |
| Second face | 210b |
| Region | 210b1, 210b2, 210b3 |
| Convex portion | 210c, 210c', 210d, 210e |
| First conductive material layer | 211 |
| Second metal layer | 220 |
| Third face | 220a |
| Region | 220a1, 220a2 |
| Fourth face | 220b |
| Region | 220b1, 220b2 |
| Second conductive material layer | 221 |
| Extending-out region | 222 |
| First edge | 231 |
| Second edge | 232 |
| Third edge | 233 |
| Fourth edge | 234 |
| Adapter portion | 320 |
| First end portion | 2101 |
| Second end portion | 2102 |
| Third end portion | 2103 |
| Fourth end portion | 2104 |
| Starting end | 2111, 2211 |
| First end | 2201 |
| Second end | 2202 |
| Third end | 2203 |
| Fourth end | 2204 |
| Dash line | A-A, B-B |
| Winding direction | D |
| Winding center axis | O |
| First direction | X |
| Second direction | Y |
| Third direction | Z |
| Fourth direction | Y' |
| Fifth direction | X' |
| First distance | D₁ |
| Second distance | D₂ |
| Third distance | L₁ |
| Fourth distance | L₂ |
| Fifth distance | L₃ |
| Thickness | T₁, T₄, T₅ |
| Height | T₂, T₃, T₆ |

### DETAILED DESCRIPTION OF EMBODIMENTS

The following will clearly describe technical solutions in embodiments of the present application in detail. Obviously, the described embodiments are only part of the embodiments of the present application, not all of the embodiments. Unless otherwise defined, all technical and scientific terms used herein have the same meaning as those generally understood by those skilled in the technical field of the present application. The terms used in the specification of the present application are for the purpose of describing specific embodiments only and are not intended to limit the present application.

Hereinafter, embodiments of the present application will be described in detail. However, the present application may be embodied in many different forms and can not be construed as limited to exemplary embodiments illustrated herein. Instead, these exemplary embodiments are provided so that the present application is communicated thoroughly and in detail to those skilled in the art.

In addition, for simplicity and clarity, dimensions or thicknesses of various assemblies and layers may be enlarged in the accompanying drawings. Throughout the full text, the same values refer to the same elements. As used herein, the term "and/or" includes any and all combinations of one or more related enumerated items. In addition, it is to be understood that when element A is referred to as being "connected" with element B, element A may be directly connected with element B, or there may be an intermediate element C and elements A and B may be indirectly connected with each other.

Further, the use of "may" when describing the embodiments of the present application means "one or more embodiments of the present application".

The technical terms used herein are for the purpose of describing specific embodiments and are not intended to limit the present application. As used herein, the singular form is intended to include the plural form as well, unless the context explicitly states otherwise. It is to be further understood that the term "include", when used in the specification, refers to the presence of described features, values, steps, operations, elements and/or components, but does not exclude the presence or addition of one or more other features, values, steps, operations, elements, components and/or combinations thereof.

Spatially related terms, such as "above", may be used herein for ease of describing the relationship between one element or feature and the other element(s) or feature(s) as illustrated in the figure. It is to be understood that in addition to the direction described in the figure, the spatially related terms are intended to include different directions of the equipment or device in use or operation. For example, if the equipment in the figure is turned over, the element described as being "above" the other element or feature will be directed "below" the other element or feature. Therefore, the exemplary term "above" may include both the above and below directions. It is to be understood that although terms of first, second, third and the like may be used herein to describe various elements, components, regions, layers and/or portions, such elements, components, regions, layers and/or portions can not be limited to these terms. These terms are used to distinguish one element, component, region, layer or portion from another element, component, region, layer or portion. Therefore, the first element, component, region, layer or portion discussed below may be referred to as the second element, component, region, layer or portion without departing from the guidance of the exemplary embodiments.

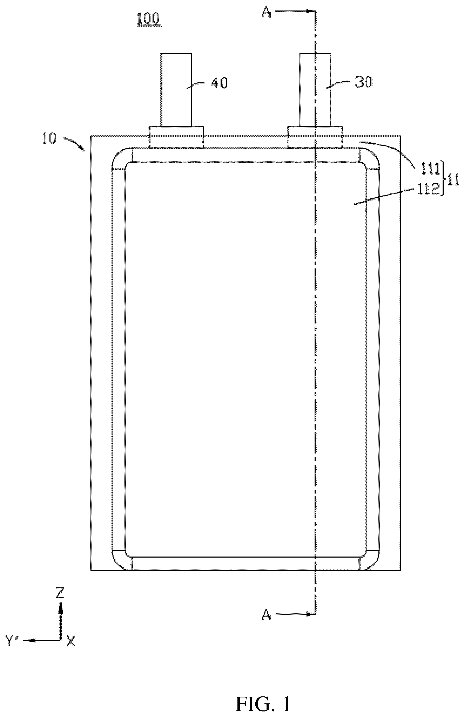

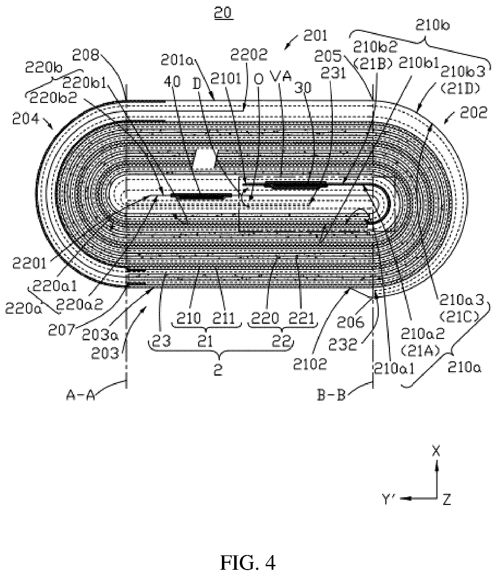

Referring to FIGS. 1 to 3, an embodiment of the present application provides an electrochemical device 100, including a shell 10 and an electrode assembly 20 disposed in the shell 10. Referring to FIG. 4 together, the electrode assembly 20 is formed by winding a stacked body 2. The stacked body 2 includes a first conductive layer 21, a second conductive layer 22, and a first layer 23 configured between the first conductive layer 21 and the second conductive layer 22. The electrode assembly 20 further includes a first conductive plate 30 and a second conductive plate 40. The first conductive plate 30 is electrically connected to the first conductive layer 21, and the second conductive plate 40 is electrically connected to the second conductive layer 22. The first conductive plate 30 and the second conductive plate 40 extend from one end of the shell 10 to be connected to external equipment (not shown). A three-dimensional coordinate system is established based on a first direction X, a fourth direction Y' and a third direction Z which are perpendicular to each other. In the present application, the first direction X is a direction perpendicular to one surface of the first conductive plate 30, the fourth direction Y' is a direction from the first conductive plate 30 to the second conductive plate 40, and the third direction Z is a direction in which the first conductive plate 30 or the second conductive plate 40 protrudes out of the stacked body 2 and is also a direction of a winding center axis O of the electrode assembly 20. The first conductive layer 21, the first layer 23, and the second conductive layer 22 are sequentially stacked and then wound around the winding center axis O to form the electrode assembly 20. For example, the stacked body 2 may be wound clockwise around the winding center axis O to form the electrode assembly 20. In some embodiments, the outermost layer of the first conductive layer 21, the first layer 23, and the second conductive layer 22 is the first conductive layer 21 after winding. In some embodiments, the first conductive layer 21 may be a positive electrode, and the second conductive layer 22 may be a negative electrode. In other embodiments, the first conductive layer 21 may be a negative electrode, and the second conductive layer 22 may be a positive electrode. Since the first conductive layer 21 has a greater hardness, the hardness of the electrode assembly 20 can be increased, thereby increasing the mechanical impact resistance of the electrode assembly 20. In other embodiments, after winding, the outermost layer of the first conductive layer 21, the first layer 23, and the second conductive layer 22 may also be the second conductive layer 21 or the first layer 23.

As shown in FIG. 4, in the winding direction D, the electrode assembly 20 includes a first segment 201, a first bent segment 202, a second segment 203, and a second bent segment 204 connected in sequence. The first direction X is also the stacking direction of the first conductive layer 21 in the first segment 201 or the second segment 203. In some embodiments, the first segment 201 and the second segment 203 may be straight segments. In other embodiments, in the winding direction D, the electrode assembly 20 may further include four bent segments connected in sequence. In some embodiments, when the first segment 201 and the second segment 203 are straight segments, the first conductive plate 30 and the second conductive plate 40 may both be located in the first segment 201, which may reduce the bending of the first conductive plate 30, so that the flatness of the first conductive plate 30 is improved, the stress of burrs of the first conductive plate 30 piercing through the first layer 23 is also reduced, and the safety performance is improved.

The first segment 201 has a first outer surface 201a, and the second segment 203 has a second outer surface 203a. The first segment 201 located at the outermost side of the electrode assembly 20 and the first bent segment 202 located at the outermost side of the electrode assembly 20 are connected at a first connection end 205. The first connection end 205 is a starting portion of a bent edge at the rightmost side of the first bent segment 202 in FIG. 4 in the winding direction D, and the first connection end 205 is also the intersecting portion of a dash line B-B formed by the extension of the bent edge located at the innermost and right side of the electrode assembly 10 in the first direction X and the first outer surface 201a. The first bent segment 202 located at the outermost side of the electrode assembly 20 and the second segment 203 located at the outermost side of the electrode assembly 20 are connected at a second connection end 206. The second connection end 206 is an ending portion of the bent edge at the rightmost side of the first bent segment 202 in FIG. 4 in the winding direction D, and the second connection end 206 is also the intersecting portion of the dash line B-B formed by the extension of the bent edge located at the innermost and right side of the electrode assembly 10 in the first direction X and the second outer surface 203a. The second segment 203 located at the outermost side of the electrode assembly 20 and the second bent segment 204 located at the outermost side of the electrode assembly 20 are connected at a third connection end 207. The third connection end 207 is a starting portion of a curve at the leftmost side of the second bent segment 204 in FIG. 4 in the winding direction D, and the third connection end 207 is also the intersecting portion of a dash line A-A formed by the extension of the bent edge located at the innermost and left side of the electrode assembly 10 in the first direction X and the second outer surface 203a. The second bent segment 204 located at the outermost side of the electrode assembly 20 and the first segment 201 located at the outermost side of the electrode assembly 20 are connected at a fourth connection end 208. The fourth connection end 208 is an ending portion of the curve at the leftmost side of the second bent segment 204 in FIG. 4 in the winding direction D, and the fourth connection end 208 is also the intersecting portion of the dash line A-A formed by the extension of the bent edge located at the innermost and left side of the electrode assembly 10 in the first direction X and the first outer surface 201a. In the first direction X, the first connection end 205 and the second connection end 206 are flush with each other, and the third connection end 207 and the fourth connection end 208 are flush with each other.

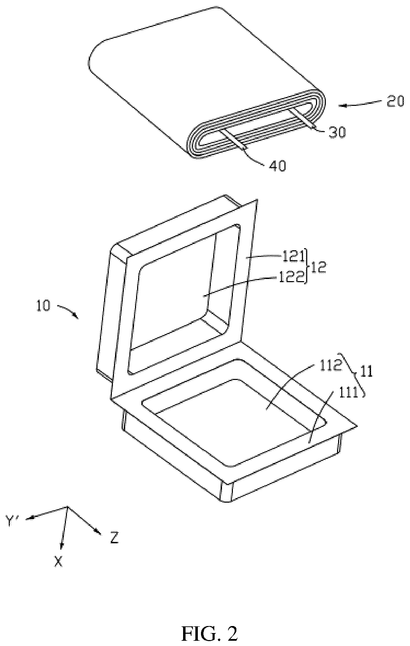

In some embodiments, the shell 10 may be a packaging bag obtained by encapsulation using an encapsulation film, i.e., the electrochemical device 100 is a pouch battery. As shown in FIG. 2, the shell 10 includes a first shell 11 and a second shell 12 disposed opposite to each other in the first direction X. The first shell 11 includes a first shell zone 111 and a second shell zone 112 connected to each other. Three sides of the second shell zone 112 are surrounded by the first shell zone 111. The second shell 12 includes a third shell zone 121 and a fourth shell zone 122 connected to each other. Three sides of the fourth shell zone 122 are surrounded by the third shell zone 121. The second shell zone 112 and the fourth shell zone 122 together form a containing space (not shown) for containing the electrode assembly 20. The first shell zone 111 and the third shell zone 121 are connected, so as to seal the above containing space. The first conductive plate 30 is electrically connected to the stacked body 2 and extends out of the shell 10 from the connection between the first shell zone 111 and the third shell zone 121, therefore, the first conductive plate 30 may be configured to connect the stacked body 2 to the external equipment. The second conductive plate 40 is connected to the stacked body 2 and extends out of the shell 10 from the connection between the first shell zone 111 and the third shell zone 121, therefore, the second conductive plate 40 may be configured to connect the stacked body 2 to the external equipment. In some embodiments, the first conductive plate 30 and the second conductive plate 40 may extend out of the shell 10 in the third direction Z. In other embodiments, the shell 10 may also be a metal shell, for example, a steel shell or an aluminum shell.

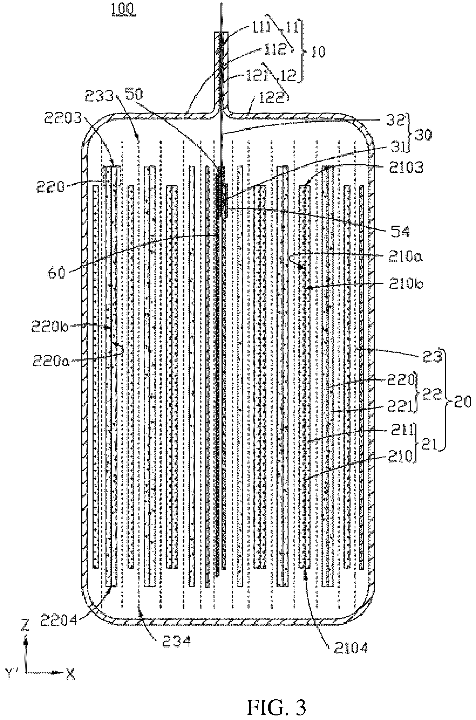

As shown in FIGS. 3 and 4, the first conductive layer 21 includes a first metal layer 210 and a first conductive material layer 211 disposed in a stacked mode. The first metal layer 210 may have the function of collecting current, for example, the first metal layer 210 may include aluminum or nickel. In some embodiments, the first metal layer 210 includes aluminum. The first conductive material layer 211 includes an active substance, which may include at least one of lithium cobaltate, lithium manganate, lithium nickelate, lithium nickel-cobalt manganate, lithium iron phosphate, lithium ferric manganese phosphate, lithium vanadium phosphate, lithium vanadyl phosphate, lithium enriched manganese-based material, or lithium nickel-cobalt aluminate.

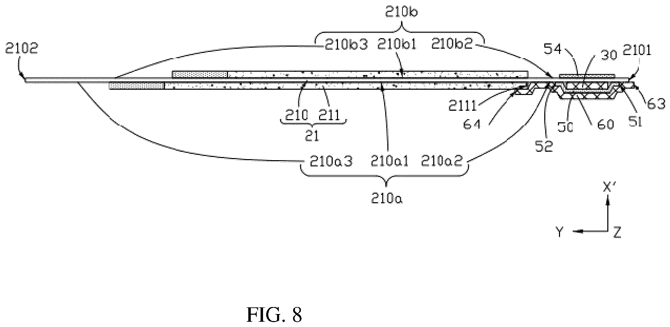

Referring to FIGS. 4, 5A, and 8 together, the first metal layer 210 includes a first face 210a and a second face 210b disposed opposite to each other in the first direction X. As shown in FIG. 4, when viewed in the third direction Z, the first face 210a of the first metal layer 210 is closer to the winding center axis O of the electrode assembly 20 compared to the second face 210b. In some embodiments, the first face 210a includes a region 210a1 covered with the first conductive material layer 211 and regions 210a2, 210a3 separated from the first conductive material layer 211. The second face 210b includes a region 210b1 covered with the first conductive material layer 211 and regions 210b2, 210b3 separated from the first conductive material layer 211. When the first conductive layer 21 is unfolded, another three-dimensional coordinate system is established according to a second direction Y, the third direction Z, and a fifth direction X' which are perpendicular to each other, the second direction Y is defined as an extension direction of the first conductive layer 21 before the stacked body 2 is wound, and the fifth direction X' is defined as a stacking direction of the first metal layer 210 and the first conductive material layer 211 after the first conductive layer 21 is unfolded, and also is the stacking direction of the second metal layer 220 and the second conductive material layer 211 after the second conductive layer 22 is unfolded. In the second direction Y, the first metal layer 210 further includes a first end portion 2101 and a second end portion 2102 disposed opposite to each other. The first end portion 2101 serves as a starting end for the first conductive layer 21 to be wound, and the second end portion 2102 serves as an ending end for the first conductive layer 21 to be wound. Both the first end portion 2101 and the second end portion 2102 extend in the third direction Z. In some embodiments, after the stacked body 2 is wound around the winding center axis O direction to form the electrode assembly 20, the first end portion 2101 is located in the center of the electrode assembly 20 and the second end portion 2102 is located on the second outer surface 203a of the second segment 203. The region 210a2 of the first face 210a that is closer to the first end portion 2101 than the second end portion 2102 and separated from the first conductive material layer 211 is a surface (hereinafter referred to as: a first surface 21A) of the first conductive layer 21 in the first direction X, and the region 210b2 of the second face 210b that is closer to the first end portion 2101 than the second end portion 2102 and separated from the first conductive material layer 211 is another surface (hereinafter referred to as: a second surface 21B) of the first conductive layer 21 in the first direction X. The first surface 21A and the second surface 21B are disposed opposite to each other, and both the first surface 21A and the second surface 21B are exposed to the first conductive material layer 211. The first surface 21A and the second surface 21B are covered with the wound stacked body 2. The first conductive plate 30 is connected to the first surface 21A. When viewed in the first direction X, the first conductive plate 30 partially overlaps the first surface 21A. As shown in FIG. 8, in some embodiments, the first conductive plate 30 may be located between the first end portion 2101 and the first conductive material layer 211 in the second direction Y.

In some embodiments, the first conductive plate 30 is welded to the first surface 21A, so that a high connection strength is provided between the first conductive plate 30 and the first surface 21A. Further, the first conductive plate 30 may include a first conductive zone 31 and a second conductive zone 32. The first conductive zone 31 is welded to the first surface 21A. When viewed in the first direction X, the first conductive zone 31 overlaps the first surface 21A. The second conductive zone 32 is connected to the first conductive zone 31, and the second conductive zone 32 is a region that extends out of the shell 10 when viewed in the first direction X.

As shown in FIG. 4, in some embodiments, the region 210a3 of the first face 210a that is closer to the second end portion 2102 than the first end portion 2101 and separated from the first conductive material layer 211 is another surface (hereinafter referred to as: a third surface 21C) of the first conductive layer 21 in the first direction X, and the region 210b3 of the second face 210b that is closer to the second end portion 2102 than the first end portion 2101 and separated from the first conductive material layer 211 is another surface (hereinafter referred to as: a fourth surface 21D) of the first conductive layer 21 in the first direction X. The third surface 21C and the fourth surface 21D are disposed opposite to each other in the first direction X. Both the third surface 21C and the fourth surface 21D are exposed to the first conductive material layer 211. After the stacked body 2 is wound around the winding center axis O direction to form the electrode assembly 20, the fourth surface 21D forms an outer surface of the electrode assembly 20, i.e., the electrode assembly 20 is ended by the first metal layer 210.

As shown in FIG. 3, the first metal layer 210 further includes a third end portion 2103 and a fourth end portion 2104 located at the other side of the third end portion 2103 in the third direction Z. When viewed in the first direction X, the first conductive plate 30 extends out of the third end portion 2103. The third end portion 2103 and the fourth end portion 2104 are also two end portions of the first conductive layer 21 in the third direction Z.

Referring to FIGS. 3 and 4 together, the second conductive layer 22 includes a second metal layer 220 and a second conductive material layer 221 disposed in a stacked mode. The second metal layer 220 may have the function of collecting current, for example, the second metal layer 220 may include copper, nickel, or carbon-based conductive materials. In some embodiments, the second metal layer 220 includes copper. The second conductive material layer 221 includes an active substance, which may be selected from at least one of a graphite-like material, an alloy-like material, a lithium metal, and alloys thereof. The graphite-like material may be selected from at least one of artificial graphite and natural graphite; and the alloy-like material may be selected from at least one of silicon, silicon oxide, tin and titanium sulfide.

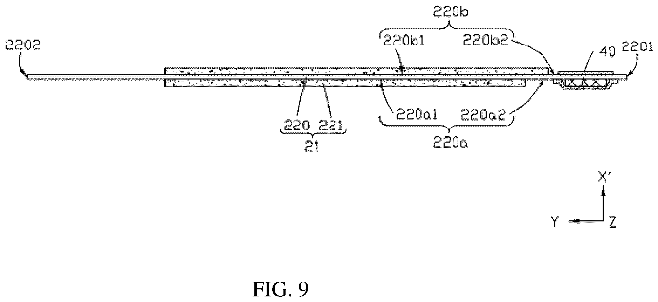

Referring to FIGS. 4 and 9 together, the second metal layer 220 includes a third face 220a and a fourth face 220b disposed opposite to each other in the first direction X. As shown in FIG. 4, when viewed in the third direction Z, the third face 220a of the second metal layer 220 is closer to the winding center axis O of the electrode assembly 20 compared to the fourth face 220b. The third face 220a includes a region 220a1 covered with the second conductive material layer 221 and a region 220a2 separated from the second conductive material layer 221, and the fourth face 220b includes a region 220b1 covered with the second conductive material layer 221 and a region 220b2 separated from the second conductive material layer 221. In the second direction Y, the second metal layer 220 further includes a first end 2201 and a second end 2202 disposed opposite to each other. The first end 2201 serves as a starting end of the second conductive layer 22 to be wound, and the second end 2202 serves as an ending end of the second conductive layer 22 to be wound. Both the first end 2201 and the second end 2202 extend in the third direction Z. The second conductive plate 40 is connected to the region 220a2 of the third face 220a that is closer to the first end 2201 than the second end 2202 and separated from the second conductive material layer 221. In some embodiments, the second conductive plate 40 is welded to the third face 220a, so that a higher connection strength is provided between the second conductive plate 40 and the third face 220a.

As shown in FIG. 3, in the third direction Z, the second metal layer 220 further includes a third end 2203 and a fourth end 2204 located at the other side of the third end 2203. The second conductive plate 40 extends out of the third end 2203 when viewed in the first direction X. The third end 2203 and the fourth end 2204 are also two end portions of the second conductive layer 22 in the third direction Z.

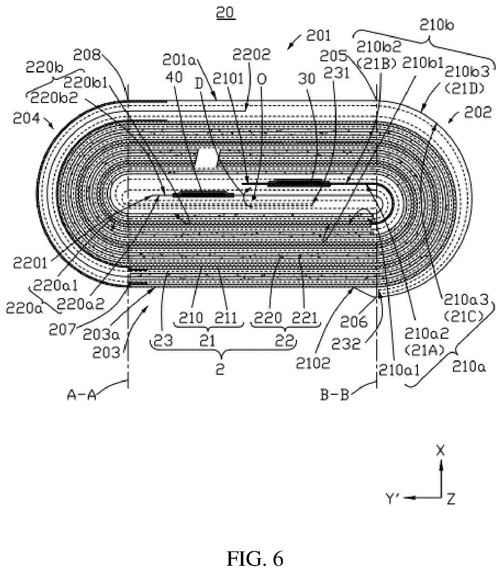

Referring to FIG. 6, in other embodiments, the connection location of the first conductive plate 30 and the second conductive plate 40 may be varied. For example, the first conductive plate 30 may be connected to the region 210b2 (i.e., the second surface 21B) of the second face 210b that is closer to the first end portion 2101 than the second end portion 2102 and separated from the first conductive material layer 211. The second conductive plate 40 may be connected to the region 220b2 of the fourth face 220b that is closer to the first end 2201 than the second end 2202 and separated from the second conductive material layer 221.

The first layer 23 is configured to prevent the first conductive layer 21 and the second conductive layer 22 from being in direct contact, thereby reducing the possibility of contact short-circuiting between the first conductive layer 21 and the second conductive layer 22. The first layer 23 includes an insulating material, and the insulating material may be selected from at least one of polypropylene, polyethylene, polyvinylidene fluoride, vinylidene fluoride-hexafluoropropylene copolymer, polymethyl methacrylate or polyethylene glycol. For example, the first layer 23 may be a barrier film. As shown in FIGS. 3 and 4, in the second direction Y, the first layer 23 includes a first edge 231 and a second edge 232 disposed opposite to each other. The first edge 231 serves as a starting end for the first layer 23 to be wound, and the second edge 232 serves as an ending end for the first layer 23 to be wound. Both the first edge 231 and the second edge 232 extend in the third direction Z. In the third direction Z, the first layer 23 further includes a third edge 233 and a fourth edge 234 located at the other side of the third edge 233. Both the third edge 233 and the fourth edge 234 extend in the second direction Y. When viewed in the first direction X, both the first conductive plate 30 and the second conductive plate 40 extend out of the third edge 233.

As shown in FIG. 3, in some embodiments, in order to reduce the possibility of lithium precipitation from a negative electrode, in the third direction Z, the third end 2203 of the second conductive layer 22 extends beyond the third end portion 2103 of the first conductive layer 21, and the fourth end 2204 of the second conductive layer 22 extends beyond the fourth end portion 2104 of the second conductive layer 22. The region of the second conductive layer 22 that extends beyond the first conductive layer 21 in the third direction Z is an extending-out region 222. Further, in order to sufficiently avoid direct contact between the first conductive layer 21 and the second conductive layer 22, in the third direction Z, the third edge 233 of the first layer 23 extends beyond the third end 2203 of the second conductive layer 22; and the fourth edge 234 of the first layer 23 extends beyond the fourth end 2204 of the second conductive layer 22. Thus, the third edge 233 and the fourth edge 234 of the first layer 23 are two edges of the stacked body 2 in the third direction Z.

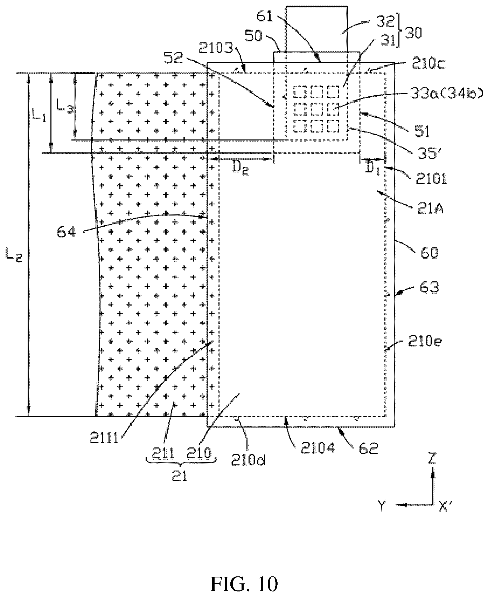

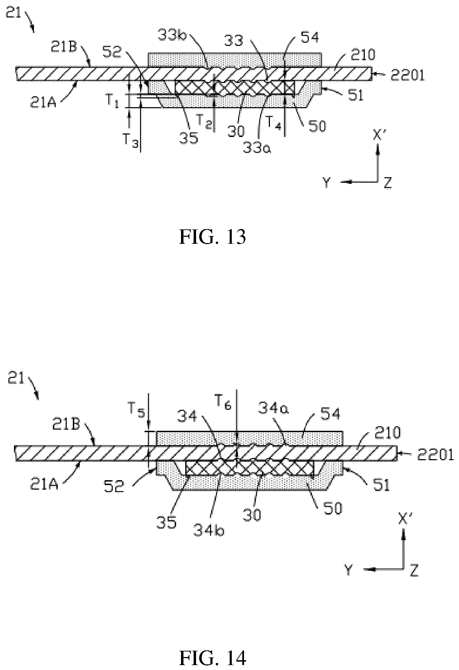

As shown in FIG. 13, in some embodiments, at least one convex portion 33 may be formed at a weld of the first conductive plate 30 and the first surface 21A. For example, a plurality of convex portions 33 arranged in a matrix may be formed at the weld of the first conductive plate 30 and the first surface 21A. The convex portions 33 protrude from the first surface 21A toward the first conductive plate 30. The convex portions 33 may be formed in the welding process, but are not limited by the present application. Meanwhile, at least one convex portion 33a is correspondingly formed on a surface of the first conductive plate 30 back from the first surface 21A, and at least one concave portion 33b is correspondingly formed on the second surface 21B of the first metal layer 210. On the other hand, convex portions 35 may be formed on the edges of the first conductive plate 30. The convex portions 35 may be formed in the cutting process of the first conductive plate 30, but are not limited by the present application. The convex portions 35 may also be referred to as burrs. The roots of the convex portions 35 are connected to the first conductive plate 30, while the heads of the convex portions 35 may face different directions. For example, as shown in FIG. 13, the head of the convex portion 35 may face the second layer 50. Referring in conjunction with FIG. 10, the head of the convex portion 35' may also extend out along an extension plane of the first conductive plate 30.

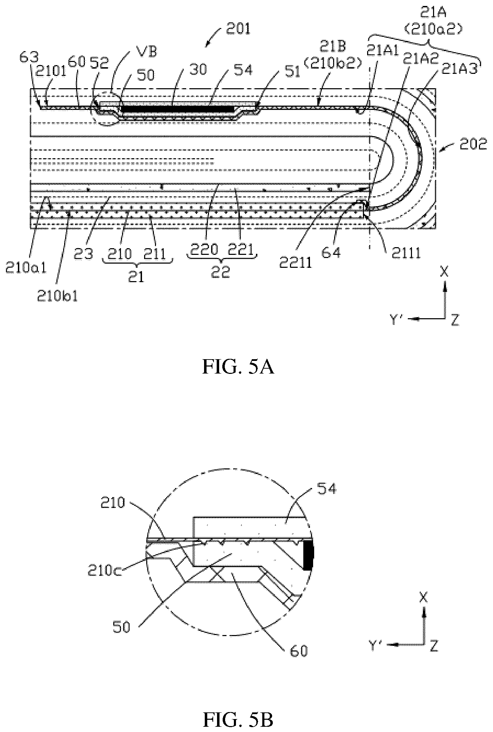

As shown in FIGS. 5A and 10, the electrode assembly 20 further includes a second layer 50 and a third layer 60. As shown in FIG. 10, the second layer 50 covers a region, overlapping the first surface 21A, of the first conductive plate 30 when viewed in the fifth direction X'. The second layer 50 is configured to cover the above convex portions 33a, 35, reducing the possibility of the above convex portions piercing through the first layer 23 and being short-circuited in contact with the second conductive layer 22. The thickness T₁ of the second layer 50 is not less than the protruding height T₂ of the convex portion 33a and not less than the protruding height T₃ of the convex portion 35. For example, when the thickness T₄ of the first conductive plate 30 before welding is 50 µm to 200 µm, the height T₂ of the convex portion 33a formed after welding is 1 µm to 10 µm, and the protruding height T₃ of the convex portion 35 is 1 µm to 10 µm. The thickness T₁ of the second layer 50 is 10 µm to 16 µm. The height T₂ of the convex portion 33a and the height T₃ of the convex portion 35 may be measured using an optical microscope after disassembling the second layer 50. The thickness T₁ of the second layer 50 and the thickness T₄ of the first conductive plate 30 may be measured using a direct measurement method, such as direct measurement using calipers or other suitable gauges. The second layer 50 may be a single-sided adhesive or a double-sided adhesive including an insulating material, and the insulating material may be selected from at least one of polypropylene, polyethylene, polyvinylidene fluoride, vinylidene fluoride-hexafluoropropylene copolymer, polymethyl methacrylate, or polyethylene glycol. In other embodiments, the second layer 50 may also be a ceramic coating.

As shown in FIG. 14, in other embodiments, at least one concave portion 34 may also be formed at the weld of the first conductive plate 30 and the first surface 21A. For example, a plurality of concave portions 34 arranged in a matrix may be formed at the weld of the first conductive plate 30 and the first surface 21A. The concave portions 34 may be formed in the welding process, but are not limited by the present application. The concave portions 34 are concaved from the first surface 21A toward the first conductive plate 30. At the same time, at least one convex portion 34a is correspondingly formed on the second surface 21B, and at least one concave portion 34b is correspondingly formed on the surface of the first conductive plate 30 back from the first surface 21A.

Referring to FIGS. 5A and 14, in some embodiments, the electrode assembly 50 may further include a fifth layer 54, which is disposed on the second surface 21B. As shown in FIG. 14, when viewed in the fifth direction X', the fifth layer 54 covers a region, overlapping the second surface 21B, of the first conductive plate 30. The fifth layer 54 is configured to cover the above convex portions 34a. The thickness T₅ of the fifth layer 54 is not less than the protruding height T₆ of the convex portions 34a.

In the second direction Y, the second layer 50 includes a seventh end portion 51 located at one side of the first end portion 2101 and an eighth end portion 52 located at one side of the second end portion 2102. The seventh end portion 51 and the eighth end portion 52 may both extend in the third direction Z. When viewed in the fifth direction X', the seventh end portion 51 intersects with the third end portion 2103 of the first conductive layer 21, and the eighth end portion 52 also intersects with the third end portion 2103 of the first conductive layer 21.

As shown in FIG. 10, when viewed in the fifth direction X', the third layer 60 covers at least a region where the convex portions 33a and the second layer 50 overlap, and the third layer 60 and the second layer 50 partially overlap. In the fifth direction X', the second layer 50 is disposed between the first surface 21A and the third layer 60. Thus, the third layer 60 may further reduce the possibility of the convex portions 33a piercing through the first layer 23 and being short-circuited in contact with the second conductive layer 22. Further, when viewed in the fifth direction X', the third layer 60 may also cover at least a region where the second layer 50 overlaps the first conductive zone 31 of the first conductive plate 30. Thus, the third layer 60 may also further reduce the possibility that the convex portions 35 at the edges of the first conductive plate 30 pierce through the first layer 23 and are short-circuited in contact with the second conductive layer 22. Furthermore, when viewed in the fifth direction X', the third layer 60 covers the entire first surface 21A. Thus, the third layer 60 may provide insulating protection to the exposed first surface 21A, reducing the possibility of the first surface 21A being short-circuited in contact with the second metal layer 220 during mechanical abuse, and also reducing the possibility of the first metal layer 210 being torn at the first surface 21A, and the torn first metal layer 210 piercing through the first layer 23 and being short-circuited in contact with the second metal layer 220 during mechanical abuse. The third layer 60 may be a single-sided adhesive or a double-sided adhesive including an insulating material, and the insulating material may be selected from at least one of polypropylene, polyethylene, polyvinylidene fluoride, vinylidene fluoride-hexafluoropropylene copolymer, polymethyl methacrylate, or polyethylene glycol. The thickness of the third layer 60 may be 10 µm to 16 µm. In other embodiments, the third layer 60 may also be a ceramic coating.

In the third direction Z, the third layer 60 includes a fifth end portion 61 and a sixth end portion 62 located at the other side of the fifth end portion 61. The fifth end portion 61 and the sixth end portion 62 may both extend in the second direction Y. In the second direction Y, the third layer 60 further includes a ninth end portion 63 located at one side of the first end portion 2101 and a tenth end portion 64 located at one side of the second end portion 2102. The ninth end portion 63 and the tenth end portion 64 may both extend in the third direction Z. The ninth end portion 63 is connected between the fifth end portion 61 and the sixth end portion 62, and the tenth end portion 64 is also connected between the fifth end portion 61 and the sixth end portion 62. When the third layer 60 covers the entire exposed first surface 21A, in the second direction Y, the third layer 60 extends beyond the seventh end portion 51 and the eighth end portion 52 from a region overlapping the second layer 50. That is, in the second direction Y, the ninth end portion 63 of the third layer 60 extends beyond the seventh end portion 51 of the second layer 50, and the tenth end portion 64 of the third layer 60 extends beyond the eighth end portion 52 of the second layer 50. In some embodiments, in order to enable the third layer 60 to sufficiently cover the entire first surface 21A, the third layer 60 at least overlaps the first surface 21A completely. That is, the third layer 60 satisfies at least that the fifth end portion 61 overlaps the third end portion 2103, the sixth end portion 62 overlaps the fourth end portion 2104, the ninth end portion 63 overlaps the first end portion 2101, and the tenth end portion 64 is connected with the first conductive material layer 211.

In the present application, by providing the second layer 50 and the third layer 60, the second layer 50 covers the region, overlapping the first surface 21A, of the first conductive plate 30, and the third layer 60 covers the entire exposed first surface 21A, thereby reducing the possibility of a short circuit of the electrochemical device 100, reducing the possibility of transient high-heat build-up in the event of a short circuit, and prolonging the service life of the electrochemical device 100.

As shown in FIG. 5A, in some embodiments, the first surface 21A forms a first zone 21A1, a second zone 21A2, and a third zone 21A3 after the stacked body 2 is folded back once. The first zone 21A1 and the second zone 21A2 may be disposed opposite to each other apart from the first layer 23 in the first direction X. The first zone 21A1 is located in the first segment 201, and the second zone 21A2 is located in the second segment 203. The third zone 21A3 is connected between the first zone 21A1 and the second zone 21A2, and the third zone 21A3 is located in the first bent segment 202. The first end portion 2101 is located in the first zone 21A1, i.e., the first zone 21A1 is closer to the starting end of the first conductive layer 21 to be wound compared to the second zone 21A2. The first conductive plate 30 is connected to the first zone 21A1. At this time, in the second direction Y, the third layer 60 extends from the first zone 21A1 to the third zone 21A3 and further to the second zone 21A2. When viewed in the first direction X, a starting end 2111 of the first conductive material layer 211 is connected to the second zone 21A2.

In some embodiments, when viewed in the first direction X, the first conductive plate 30 is separated from the third layer 60 disposed in the second zone 21A2.

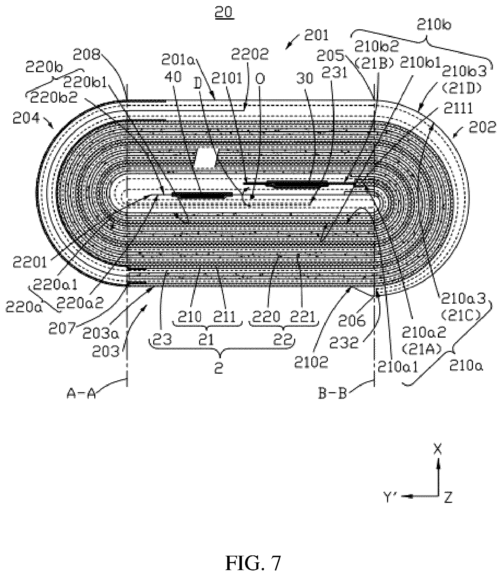

Referring to FIG. 7, in another embodiment, the first surface 21A may also be located only in the first segment 201. That is, the first surface 21A does not extend to the first bent segment 202 and the second segment 203 after the stacked body 2 is folded back once. At this time, the third layer 60 is also located only in the first segment 201, and the starting end 2111 of the first conductive material layer 211 extends to the first segment 201, thereby facilitating the improvement of the energy density of the electrochemical device 100.

As shown in FIG. 10, in some embodiments, in the third direction Z, the third layer 60 may extend beyond the third end portion 2103 from the region overlapping the first surface 21A. That is, the third layer 60 also covers at least a portion of the second conductive zone 32 of the first conductive plate 30 when viewed in the fifth direction X'. Therefore, not only does the third layer 60 sufficiently protect the first surface 21A, but also if convex portions 210c are present in the first metal layer 210 at the third end portion 2103, a portion, extending beyond the third end portion 2103, of the third layer 60 may cover the convex portions 210c at the third end portion 2103. The convex portions 210c may be formed in the cutting process of the first metal layer 210, and the convex portions 210c may also be referred to as burrs. The roots of the convex portions 210c are connected to the third end portion 2103, while the heads of the convex portions 210c may face different directions. For example, as shown in FIG. 10, the heads of the convex portions 210c may extend along the extension plane of the first metal layer 210. Referring in conjunction to FIG. 5B, the heads of the convex portions 210c' may also face the second layer 50. In addition, the portion, extending beyond the third end portion 2103, of the third layer 60 may also cover the convex portions 35 at the edge of the second conductive zone 32, thereby reducing the possibility of the convex portions piercing through the first layer 23 and being short-circuited in contact with the second conductive layer 22.

Further, in the third direction Z, the third layer 60 may extend beyond the fourth end portion 2104 from the region overlapping the first surface 21A. Therefore, not only does the third layer 60 sufficiently protect the first surface 21A, but also if convex portions 210d are present in the first metal layer 210 at the fourth end portion 2104 (the convex portions 210d may be formed in the cutting process of the first metal layer 210, and the convex portions 210d may also be referred to as burrs), a portion, extending beyond the fourth end portion 2104, of the third layer 60 may cover the convex portions 210d at the fourth end portion 2104, thereby reducing the possibility of the convex portions piercing through the first layer 23 and being short-circuited in contact with the second conductive layer 22.

Further, when viewed in the fifth direction X', the ninth end portion 63 of the third layer 60 may further extend beyond the first end portion 2101 from the region overlapping the first surface 21A. If convex portions 210e are present in the first metal layer 210 at the first end portion 2101 (the convex portions 210e may be formed in the cutting process of the first metal layer 210, and the convex portions 210e may also be referred to as burrs), a portion, extending beyond the first end portion 2101, of the third layer 60 may cover the convex portions 210e at the first end portion 2101, thereby reducing the possibility of the convex portions piercing through the first layer 23 and being short-circuited in contact with the second conductive layer 22.

Further, when viewed in the fifth direction X', the third layer 60 may also partially overlap the first conductive material layer 211. The third layer 60 may further cover the starting end 2111 of the first conductive material layer 211 to be wound. For example, when the first surface 21A forms the first zone 21A1, the second zone 21A2, and the third zone 21A3 after the stacked body 2 is folded back once, the third layer 60 extends further to the first conductive material layer 211 after extending to the second zone 21A2. Typically, in order to reduce the possibility of lithium dendrites being generated in the second conductive layer 22, a starting end 2211 of the second conductive material layer 221 may be set to extend beyond the starting end 2111 of the first conductive material layer 211 in the winding direction D. In the present application, by setting the third layer 60 to cover the starting end 2111 of the first conductive material layer 211 to be wound, not only does the third layer 60 sufficiently protect the first surface 21A, but also even if the starting end 2211 of the second conductive material layer 221 is not beyond the starting end 2111 of the first conductive material layer 211 (e.g., due to process errors, or the paste of the second conductive material layer 221 flows too fast during coating), it also enables lithium ions separated from the first conductive material layer 211 to be fully received by the second conductive material layer 221, reducing the risk of hoarding of excessive lithium ions and generating lithium dendrites.

As shown in FIG. 10, in some embodiments, in order to satisfy that the ninth end portion 63 extends beyond the seventh end portion 51 in the second direction Y, and at the same time, the tenth end portion 64 not only extends beyond the eighth end portion 52 but also further covers the first conductive material layer 211 in the second direction Y, in some embodiments, in the second direction Y, a distance from the seventh end portion 51 to the ninth end portion 63 is defined as a first distance D₁, a distance from the eighth end portion 52 to the tenth end portion 64 is defined as a second distance D₂, and then the first distance D₁ is less than the second distance D₂ (D₁<D₂). It can be understood that since the second distance D₂ is relatively great, the first surface 21A may be bent from the first segment 201 to the second segment 203 after the stacked body 2 is folded back once.

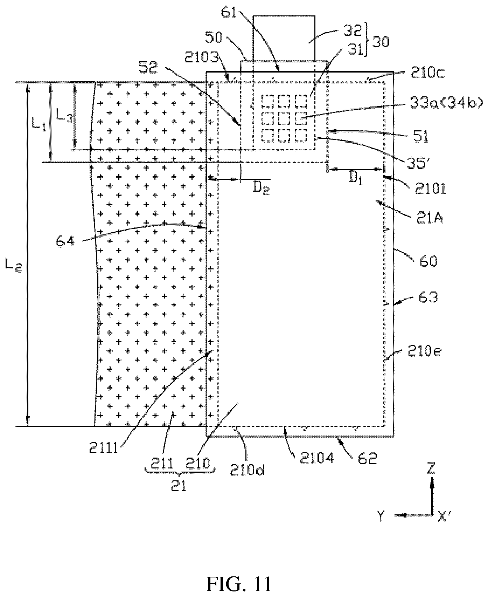

As shown in FIG. 11, in another embodiment, the first distance D₁ and the second distance D₂ are not limited to this. For example, it is considered that the first metal layer 210 and the third layer 60 may be cut together in the third direction Y after the third layer 60 is attached to the first surface 21A. The presence of the third layer 60 in the cutting process results in a reduction of the convex portions 210e generated by the first metal layer 210 at the first end portion 2101. In this case, the ninth end portion 63 of the third layer 60 does not need to exceed the first end portion 2101 in the second direction Y (at this time, the ninth end portion 63 overlaps the first end portion 2101 when viewed in the fifth direction X'), and the problem of burrs at the first end portion 2101 can also be solved. In order to reserve a space for the third layer 60 to be cut, and also to consider the wrinkle problem that may be caused if the third layer 60 is oversized in the second direction Y, at this time, the first distance D₁ may be set to be greater than the second distance D₂ (D₁>D₂).

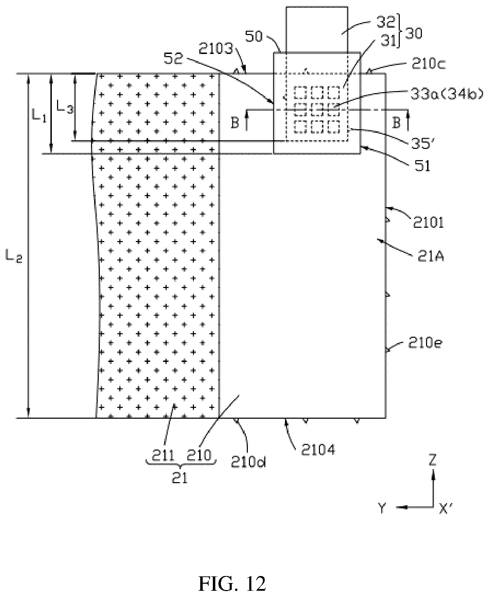

As shown in FIGS. 10 and 12, in some embodiments, in the third direction Z, the second layer 50 may extend beyond the third end portion 2103 from the region overlapping the first surface 21A. That is, the second layer 50 also covers at least a portion of the second conductive zone 32 of the first conductive plate 30 when viewed in the fifth direction X'. Therefore, the portion, exceeding beyond the third end portion 2103, of the second layer 50 may cover the convex portions 35 at the edge of the second conductive zone 32. For example, in the fifth direction X', the portion, exceeding beyond the third end portion 2103, of the second layer 50 may cover an extending-out region 222 of the second conductive layer 22 in the third direction Z, thereby reducing the possibility of the convex portions piercing through the first layer 23 and being short-circuited in contact with the extending-out region 222 of the second conductive layer 22.

Further, in the third direction Z, the second layer 50 may extend beyond the fifth end portion 61 from the region overlapping the first surface 21A. It can be understood that if a distance of the fifth end portion 61 beyond the third end portion 2103 is great, the third layer 60 may cover the convex portions 35 at the edge of the second conductive zone 32 of the first conductive plate 30 in place of the second layer 50, however, since the portion of the third layer 60 beyond the third end portion 2103 is not bonded to the first surface 21A, the portion of the third layer 60 beyond the third end portion 2103 is prone to being folded over during mechanical abuse, increasing the possibility that the convex portions 35 of the first conductive plate 30 pierce through the first layer 23 and cause a short circuit. In the present application, by limiting the second layer 50 to extend beyond the fifth end portion 61, since the excess portion of the second layer 50 is bonded to the first conductive plate 30 and is not prone to being folded over during mechanical abuse, the reliability of the second layer 50 is improved.

As shown in FIG. 10, in some embodiments, a dimension of the region, overlapping the first surface 21A, of the second layer 50 in the third direction Z is defined as a third distance L₁, and a distance of the first conductive layer 21 from the third end portion 2103 to the fourth end portion 2104 in the third direction Z is defined as a fourth distance L₂, so the third distance L₁ is less than or equal to one half of the fourth distance L₂ (L₁ ≤ 0.5L₂). It can be understood that in the event of severe mechanical abuse (e.g., if the electrochemical device is struck), the first layer may break and the first conductive layer or the second conductive layer may produce fragments, triggering a short circuit. If the third distance L₁ is greater, the overlapping region between the second layer 50 and the third layer 60 is larger, i.e. an area of the region of the first surface 21A covered with both the second layer 50 and the third layer 60 is larger. In this way, the first surface 21A is not likely to break, such that the first conductive plate 30 connected to the first surface 21A is not likely to be disconnected electrically from the first conductive layer 21 either. In the present application, by limiting the range of the third distance L₁, the first surface 21A breaks in time during severe mechanical abuse, thereby enabling the first conductive plate 30 to be disconnected electrically from the first conductive layer 21 and reducing the possibility of a short circuit.

In some embodiments, a dimension of the region, overlapping the first surface 21A, of the first conductive plate 30 in the third direction Z is defined as a fifth distance L₃, so the fifth distance L₃ is less than or equal to one third of the fourth distance L₂ (Li ≤ L₂/3). It can be understood that if the fifth distance L₃ is greater, an area of a region, covered with the first conductive plate 30, of the first surface 21A is larger. In this way, in the event of severe mechanical abuse, the first surface 21A is not likely to break, such that the first conductive plate 30 connected to the first surface 21A is not likely to be disconnected electrically from the first conductive layer 21 either. In the present application, by limiting the range of the fifth distance L₃, the first surface 21A breaks in time during severe mechanical abuse, thereby enabling the first conductive plate 30 to be disconnected electrically from the first conductive layer 21 and reducing the possibility of a short circuit.

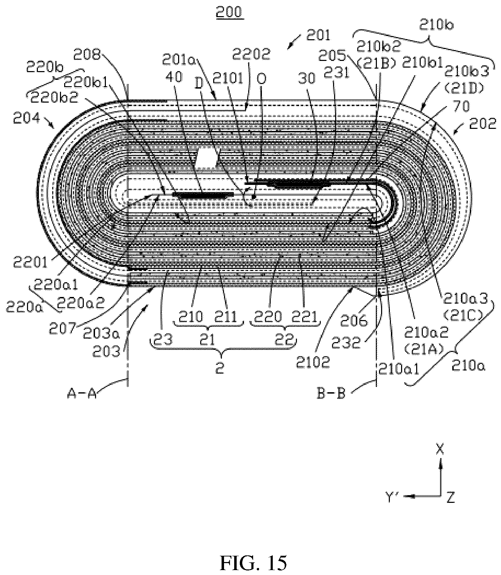

Referring to FIG. 15, another embodiment of the present application also provides an electrochemical device 200, which differs from the above-described electrochemical device 100 in that an electrode assembly 20 of the electrochemical device 200 further includes a fourth layer 70. The fourth layer 70 covers the second surface 21B when viewed in the first direction X. The fourth layer 70 may provide insulating protection to the exposed second surface 21B, reducing the possibility of short-circuiting of the second surface 21B in contact with the second metal layer 220 during mechanical abuse, also reducing the possibility of the first metal layer 210 being torn at the second surface 21B and the torn first metal layer 210 piercing through the first layer 23 and being short-circuited in contact with the second metal layer 220 during mechanical abuse, and further prolonging the service life of the electrochemical device 100. The fourth layer 70 may be a single-sided adhesive or a double-sided adhesive including an insulating material. The material of the fourth layer 70 may be substantially the same as that of the third layer 60, and is not described repeatedly herein.

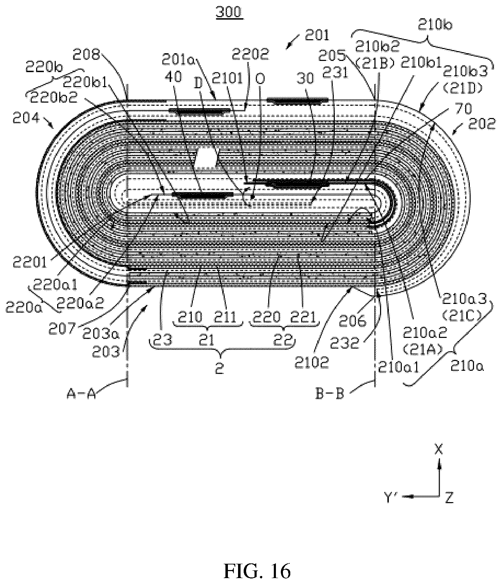

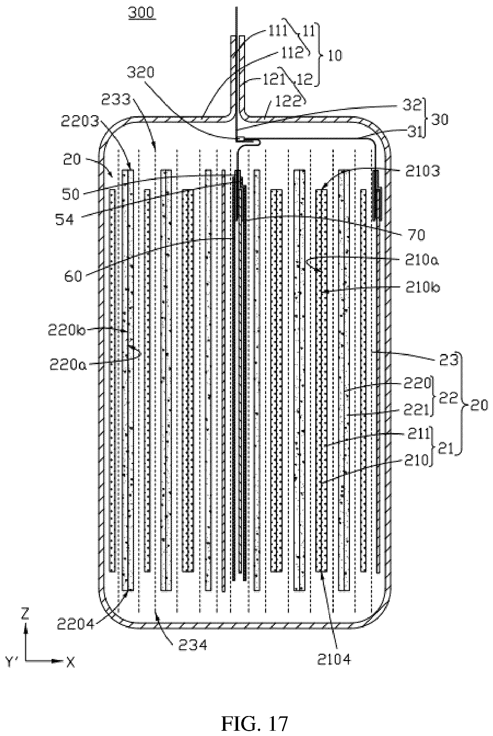

Referring to FIGS. 16 and 17, yet another embodiment of the present application further provides an electrochemical device 300, which differs from the above-described electrochemical device 200 in that a first conductive plate 30 of the electrochemical device 300 includes at least two first conductive zones 31 and a second conductive zone 32. For example, the first conductive plate 30 may include two first conductive zones 31. One of the first conductive zones 31 is connected to the first surface 21A. Another first conductive zone 31 is connected to a third surface 21C. The second conductive zone 32 is connected to each first conductive zone 31 via an adapter portion 320 and extends out of the shell 10. By providing the at least two first conductive zones 31 on the first metal layer 210, the distribution of currents in the first conductive layer 21 does not become too centralized, which reduces the internal resistance of the first conductive layer 21 and thus improves a charging and discharging magnifying rate of the first conductive layer 21.

In some embodiments, the second conductive plate 40 may likewise be provided to include at least two third conductive zones (not shown) connected to the second conductive layer 22, and a fourth conductive zone (not shown) connected to each third conductive zone via an adapter portion.

The electrochemical device 100 (or the electrochemical devices 200, 300) of the present application includes all devices capable of undergoing electrochemical reactions. Specifically, the electrochemical device 100 includes all kinds of primary batteries, secondary batteries, fuel batteries, solar batteries, and capacitors (e.g., supercapacitors). Optionally, the electrochemical device 100 may be a lithium secondary battery, including a lithium metal secondary battery, a lithium ion secondary battery, a lithium polymer secondary battery, and a lithium ion polymer secondary battery.

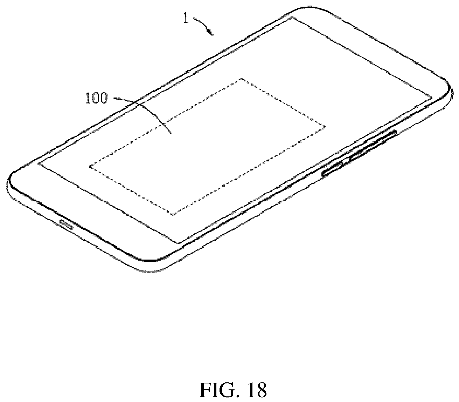

Referring to FIG. 18, an embodiment of the present application further provides an electronic device 1, including the above electrochemical device 100 (or the electrochemical devices 200, 300). The electrochemical device 100 of the present application is applicable to various fields of electronic devices 1. In one embodiment, the electronic device 1 of the present application may be, but is not limited to, a laptop computer, a pen-input computer, a mobile computer, an e-book player, a portable telephone, a portable fax machine, a portable photocopying machine, a portable printer, a head-mounted stereo headset, a video recorder, a liquid crystal display television, a portable cleaner, a portable CD player, a minidisc, a transceiver, an electronic notepad, a calculator, a memory card, a portable tape recorder, a radio, a backup power supply, a motor, an automobile, a motorcycle, a power-assisted bicycle, a bicycle, a lighting appliance, a toy, a game console, a clock, a power tool, a flash lamp, a camera, a large accumulator for household use, a lithium-ion capacitor, and the like.

The performance of the electrochemical device provided in the present application is described below by means of specific embodiments and comparative embodiments. The electrochemical device is a pouch battery as an example and is combined with specific preparation process and test methods to illustrate the present application, and the person skilled in the art should understand that a preparation method described in the present application is only an example, and any other suitable preparation methods are within the scope of the present application.

### Embodiment 1

A first conductive plate is welded to a first surface of a first metal layer, and a second conductive plate is welded to a second metal layer. A second layer is bonded at a weld of the first conductive plate and the first metal layer, and then a third layer is bonded on the first surface, and the third layer completely covers the first surface. Then, the first conductive layer, the first layer, and the second conductive layer are sequentially stacked and wound to obtain an electrode assembly, and then liquid injection, chemical formation, and encapsulation are performed to make a battery, wherein, L₁ ≤ L₂/3 and L₁ ≤ 0.5L₂.

### Embodiment 2

It differs from Embodiment 1 in that L₁ = 0.5L₂.

### Embodiment 3

It differs from Embodiment 1 in that L₂/3 < L₁ ≤ L₂/2.

### Comparative embodiment 1

It differs from Embodiment 1 in that a third layer does not cover the entire first surface, but only covers a region where the first surface is connected to a first conductive material layer.

### Comparative embodiment 2

It differs from Embodiment 2 in that a third layer does not cover the entire first surface, but only covers a region where the first surface is connected to a first conductive material layer.

### Comparative embodiment 3

It differs from Embodiment 1 in that a second layer is omitted. Meanwhile, when viewed in a first direction, a third layer does not cover an extending-out region of a second conductive layer.

### Comparative embodiment 4

It differs from Comparative embodiment 3 in that when viewed in a first direction, a third layer covers an extending-out region of a second conductive layer.

Then, batteries of each embodiment and comparative embodiment are subjected to a drop test and an impact test respectively, wherein 5 samples are taken from each group of batteries of each embodiment and comparative embodiment for the drop test, and 10 samples are taken from each group of batteries for the impact test. The corresponding test results are recorded in Table 1.

The steps of the drop test include: 1) The batteries are charged to the charging limit voltage with a 0.2 C current at a room temperature. 2) The batteries are put into a fixture warehouse, and automatic dropping equipment is used to drop the front sides, back sides, top sides, left sides, bottom sides, and right sides of the batteries for a round of landing from the position of 1.8 m in turn, and a cycle of total of six drops is a round. 3) The surface of each battery is observed after each round of drop to see if there is any damage, and the open-circuit voltage of each battery is measured. If the voltage is less than 3.0 V, it is judged as the failure of the battery. If there is no damage and the open-circuit voltage is higher than 3.0 V, it is judged that the battery is not failed, and then the test continues until the battery fails, and the number of drops of the battery when the battery fails is recorded. 4) The batteries are dismantled, and whether the first surfaces break or not is observed.

The steps of the impact test include: 1) The batteries are charged to the charging limit voltage with a current of 0.2 C at a room temperature. 2) The batteries are put on a test board and round bars with the diameter of 15.8 mm are vertically put at the centers of the front sides of the batteries. 3) A hammer of 9.1±0.1 kg is used to drop vertically in free fall from a height of 610±25 mm, and impact the intersections of the round bars and the front sides of the batteries. 4) Whether the batteries fail or not is observed.

**Table 1**

| | Number of drops | | | | | | Impact test passing rate |
|---|---|---|---|---|---|---|---|
| | 1# sample | 2# sample | 3# sample | 4# sample | 5# sample | Aver age | |
| Comparative Embodiment 1 | 31 | 33 | 29 | 32 | 27 | 30.4 | 0/10 |
| Comparative Embodiment 2 | 34 | 28 | 35 | 30 | 29 | 31.2 | 0/10 |
| Comparative Embodiment 3 | 25 | 23 | 26 | 22 | 23 | 23.8 | 2/10 |
| Comparative Embodiment 4 | 26 | 25 | 23 | 26 | 23 | 24.6 | 4/10 |
| Embodiment 1 | 61 | 53 | 59 | 60 | 51 | 56.8 | 10/10 |
| Embodiment 2 | 60 | 53 | 54 | 57 | 54 | 55.6 | 7/10 |
| Embodiment 3 | 57 | 55 | 61 | 52 | 56 | 56.2 | 8/10 |

| | | | | | | | |
|---|---|---|---|---|---|---|---|
| Note: Impact test passing rate X/10 means that out of 10 samples tested, the number of samples that pass the test is X. | | | | | | | |

As can be seen from the test results in Table 1, compared with Comparative embodiments 1-4, Embodiments 1-3 have higher drop test passing rate and impact test passing rate by covering the overlapping region of the first conductive plate and the first surface with the second layer, and then covering the entire first surface with the third layer, that is, the service life of the battery is prolonged. Moreover, compared with Embodiments 2-3, Embodiment 1 satisfies L₁ ≤ L₂/3 and L₁ ≤ 0.5L₂, and thus has the highest impact test passing rate.

The above disclosure is only a better embodiment of the present application, of course, can not be used to limit the present application, so the equivalent changes made in accordance with the present application are still covered by the scope of the present application.

## Claims

1. An electrode assembly, formed by winding a stacked body, the stacked body comprising a first conductive layer, a second conductive layer, and a first layer configured between the first conductive layer and the second conductive layer, and the first layer comprising an insulating material, wherein
the first conductive layer comprises a first surface, a first end portion, and a second end portion disposed opposite to the first end portion, and the first surface is covered with the wound stacked body;
the electrode assembly further comprises a first conductive plate, a second layer and a third layer, and
the first conductive plate is connected to the first surface;
a direction perpendicular to one surface of the first conductive plate is defined as a first direction, when viewed in the first direction, the first conductive plate partially overlaps the first surface, the second layer covers a region, overlapping the first surface, of the first conductive plate, and the second layer comprises an insulating material; and
when viewed in the first direction, the third layer covers the first surface, and the third layer comprises an insulating material; and the second layer is disposed between the first surface and the third layer in the first direction.

2. The electrode assembly according to claim 1, wherein a direction from the first end portion to the second end portion is defined as a second direction, and a direction perpendicular to the first direction and the second direction is defined as a third direction; and
in the third direction, the first conductive layer further comprises a third end portion and a fourth end portion located at the other side of the third end portion; in the third direction, the third layer comprises a fifth end portion and a sixth end portion located at the other side of the fifth end portion; and when viewed in the first direction, the first conductive plate extends out of the third end portion and the fifth end portion.

3. The electrode assembly according to claim 2, wherein in the third direction, the third layer extends beyond the third end portion from a region overlapping the first surface.

4. The electrode assembly according to claim 2, wherein in the third direction, the third layer extends beyond the fourth end portion from a region overlapping the first surface.

5. The electrode assembly according to claim 2, wherein in the third direction, the second layer extends beyond the third end portion from a region overlapping the first surface.

6. The electrode assembly according to claim 5, wherein in the third direction, the second layer extends beyond the fifth end portion from the region overlapping the first surface.

7. The electrode assembly according to claim 2, wherein the first conductive layer comprises a first metal layer and a first conductive material layer stacked in the first direction, and in the second direction, the first conductive plate is located between the first end portion and the first conductive material layer.

8. The electrode assembly according to claim 7, wherein when viewed in the first direction, the third layer partially overlaps the first conductive material layer.

9. The electrode assembly according to claim 2, wherein the second layer further comprises a seventh end portion located at one side of the first end portion and an eighth end portion located at one side of the second end portion in the second direction; the third layer further comprises a ninth end portion located at one side of the first end portion and a tenth end portion located at one side of the second end portion in the second direction; and
in the second direction, a distance from the seventh end portion to the ninth end portion is defined as a first distance, a distance from the eighth end portion to the tenth end portion is defined as a second distance, and the first distance is less than the second distance.

10. The electrode assembly according to claim 2, wherein the second layer further comprises a seventh end portion located at one side of the first end portion and an eighth end portion located at one side of the second end portion in the second direction; the third layer further comprises a ninth end portion located at one side of the first end portion and a tenth end portion located at one side of the second end portion in the second direction; and
in the second direction, a distance from the seventh end portion to the ninth end portion is defined as a first distance, a distance from the eighth end portion to the tenth end portion is defined as a second distance, and the first distance is greater than the second distance.

11. The electrode assembly according to claim 2, wherein a dimension of a region, overlapping the first surface, of the second layer in the third direction is a third distance, a distance of the first conductive layer from the third end portion to the fourth end portion in the third direction is a fourth distance, and the third distance is less than or equal to one half of the fourth distance.

12. The electrode assembly according to claim 2, wherein the first surface forms a first zone and a second zone after the stacked body is folded back once, and the first end portion is located in the first zone; the first conductive plate is connected to the first zone; and in the second direction, the third layer extends at least from the first zone to the second zone.

13. The electrode assembly according to claim 12, wherein when viewed in the first direction, the first conductive plate is separated from the third layer disposed in the second zone.

14. The electrode assembly according to claim 12, wherein the first conductive layer comprises a first metal layer and a first conductive material layer stacked in the first direction, and the first conductive material layer is connected to the second zone.

15. The electrode assembly according to claim 1, wherein the first conductive layer comprises a first metal layer and a first conductive material layer stacked in the first direction, and the first conductive plate is welded to the first metal layer.

16. The electrode assembly according to claim 15, wherein the first metal layer comprises aluminum.

17. The electrode assembly according to claim 15, wherein the first conductive layer is a positive electrode.

18. The electrode assembly according to claim 1, wherein the second conductive layer comprises a second metal layer and a second conductive material layer stacked in the first direction, the electrode assembly further comprises a second conductive plate, and the second conductive plate is welded to the second metal layer.

19. The electrode assembly according to claim 18, wherein the second metal layer comprises copper.

20. The electrode assembly according to claim 18, wherein the second conductive layer is a negative electrode.

21. The electrode assembly according to claim 15, wherein when viewed in the first direction, a weld of the first conductive plate and the first surface has a convex portion protruding from the first surface toward the first conductive plate.

22. The electrode assembly according to claim 15, wherein when viewed in the first direction, a weld of the first conductive plate and the first surface has a concave portion concaved from the first surface toward the first conductive plate.

23. The electrode assembly according to claim 2, wherein a dimension of the region, overlapping the first surface, of the first conductive plate in the third direction is a fifth distance, a distance of the first conductive layer from the third end portion to the fourth end portion in the third direction is a fourth distance, and the fifth distance is less than or equal to one third of the fourth distance.

24. The electrode assembly according to claim 1, wherein the first conductive layer further comprises a second surface opposite to the first surface in the first direction, the electrode assembly further comprises a fourth layer, the fourth layer covers the second surface, and the fourth layer comprises an insulating material.

25. An electrochemical device, comprising a shell, wherein the electrochemical device further comprises the electrode assembly according to any of claims 1 to 24, the electrode assembly is disposed in the shell, and the first conductive plate extends from one end of the shell.

26. An electronic device, wherein the electronic device comprises the electrochemical device according to claim 25.
